(19) Europäisches Patentamt
European Patent Office
Office européen des brevets

(11) **EP 4 414 924 A1**

(12) **EUROPEAN PATENT APPLICATION**

(43) Date of publication:
**14.08.2024 Bulletin 2024/33**

(21) Application number: **24156651.2**

(22) Date of filing: **08.02.2024**

(51) International Patent Classification (IPC):
**G06Q 30/0242** (2023.01)  **G06N 20/00** (2019.01)
**G06Q 30/0241** (2023.01)  **G06Q 30/0251** (2023.01)

(52) Cooperative Patent Classification (CPC):
**G06Q 30/0244; G06N 20/00; G06Q 30/0247;
G06Q 30/0251**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.02.2023 US 202318108090**

(71) Applicant: **Roku, Inc.
San Jose, CA 95110 (US)**

(72) Inventors:
• **BAMBHA, Abhishek
San Jose, 95110 (US)**
• **DING, Weicong
San Jose, 95110 (US)**

• **JETHWA, Ronica
San Jose, 95110 (US)**
• **MAHTO, Rohit
San Jose, 95110 (US)**
• **MAJUMDAR, Abhishek
San Jose, 95110 (US)**
• **VERMA, Amit
San Jose, 95110 (US)**
• **WANG, Zidong
San Jose, 95110 (US)**
• **XIAO, Fei
San Jose, 95110 (US)**

(74) Representative: **Mewburn Ellis LLP
Aurora Building
Counterslip
Bristol BS1 6BX (GB)**

(54) **REINFORCEMENT LEARNING (RL) MODEL FOR OPTIMISING LONG TERM REVENUE**

(57) Disclosed herein are system, apparatus, article of manufacture, method and/or computer program product embodiments, and/or combinations and sub-combinations thereof, for optimizing user experience/engagement and revenue. An example embodiment operates by a computer-implemented method for providing one or more advertisements to a media device. The method includes receiving, by at least one computer processor, a user state associated with a user of the media device, where the user state corresponds to a time step. The method further includes receiving a revenue value associated with the user of the media device, where the revenue value corresponds to the time step. The method also include determining an action associated with the user based on the user state and the revenue value. The action includes one or more parameters associated with the one or more advertisements. The method further includes providing the action to the user.

FIG. 1

EP 4 414 924 A1

**Description**

BACKGROUND

FIELD

This disclosure is generally directed to methods and systems for optimizing both user experience/engagement and revenue, and more particularly to methods and systems for optimizing the long term revenue with reinforcement learning to unify the goal of optimizing engagement and revenue.

BACKGROUND

Content, such as a movie or TV show, is typically displayed on a television or other display screen for watching by users. The content can include advertisements that provide revenue for a content provider or for a media system provider. By increasing the number of advertisements, as one example, the revenue can be increased. However, the increase in the number of advertisements can result in poor user experience for the users. For example, by increasing the number of advertisements, the users may drop off and/or disengage from the provided content, and therefore, the revenue can decrease.

SUMMARY

Provided herein are system, apparatus, article of manufacture, method and/or computer program product embodiments, and/or combinations and sub-combinations thereof, for optimizing both user experience/engagement and revenue. For example, system, apparatus, article of manufacture, method and/or computer program product embodiments, and/or combinations and sub-combinations thereof are provided to optimize long term revenue with reinforcement learning to optimize both user engagement and revenue.

For example, the system, apparatus, article of manufacture, method and/or computer program product embodiments, and/or combinations and sub-combinations thereof of this disclosure can use a model (e.g., a reinforcement learning (RL) model such as, but not limited to, an Alpha-RL model as discussed in more detail below) to optimize long term revenue and to address multiple challenges. One of the challenges addressed herein can be that the long term revenue not only depends on expected revenue per session, but also depends on the number of sessions (e.g., the activeness of the users) and the retention rate of the users. For example, drop of per session of user engagement may result in dropping in distinct streaming days (DSD) and user retention, which may hurt long term revenue. To address these challenges, RL models can be used for capturing delayed rewards generated by a sequence of actions such as long term expected streaming time, user retention, and long term expected revenue.

Another challenge addressed herein can be that different users can have different tolerance on the number of advertisement. Therefore, using the same engagement threshold may result in churning for users with less tolerance on advertisements. To address these challenges, user's status can be part of the observed user state, also user's demographic information, activeness, tenure, time, and other features can be used here to personalize user actions based on different tolerance of the advertisement.

Another challenge addressed herein can be that suddenly changing of user experience such as increasing a large number of advertisements can result in changing of user behavior such as drop on DSD and churning. To address these challenges, the revenue factor can be adjusted and improved gradually with the reinforcement learning (RL) method so that there is no sudden user experience change.

An example embodiment operates by a computer-implemented method for providing one or more advertisements to a media device. The method includes receiving, by at least one computer processor, a user state associated with a user of the media device, where the user state corresponds to a time step. The method further includes receiving a revenue value associated with the user, where the revenue value corresponds to the time step. The method also include determining an action associated with the user based on the user state and the revenue value. The action includes one or more parameters associated with the one or more advertisements. The method further includes providing the action to the user.

In some embodiments, the method further include receiving a second user state associated with the user, where the second user state corresponds to a second time step. The method also includes receiving a second revenue value associated with the user, where the second revenue value corresponds to the second time step. The method further includes determining a second action associated with the user based on the second user state and the second revenue value. The second action includes second one or more parameters associated with the one or more advertisements. The method further includes providing the second action to the user.

In some embodiments, the method further includes receiving information associated with the user. The information associated with the user includes demographic information of the user, activeness of the user on the media device, or a tenure time of the user with the media device. The method further includes determining the action associated with the user based on the user state, the revenue value, and the information associated with the user.

In some embodiments, the user state includes one or more of a retention rate associated with the user, an activeness of the user on the media device, one or more parameters indicating how often the user uses the media device, or one or more parameters indicating engagement of the user with the media device per a session.

In some embodiments, the determining the action associated with the user includes using a reinforcement learning model to determine a first parameter. The method further includes determining the action associated with the user using the first parameter. Also, the determining the action associated with the user can include using a relationship between values of the first parameter and the one or more parameters associated with the one or more advertisements.

In some embodiments, the providing the action to the user can include providing the one or more parameters associated with the one or more advertisements to a media system, to the media device, to a content server, or a system server. The media system, the media device, the content server, or the system server use the one or more parameters associated with the one or more advertisements to generate the one or more advertisements and provide the one or more advertisements to the user.

An example embodiment operates by a system including one or more memories and at least one processor each coupled to at least one of the memories. The at least one processor is configured to perform operations including receiving a user state associated with a user of a media device, where the user state corresponds to a time step. The operations further include receiving a revenue value associated with the user, where the revenue value corresponds to the time step. The operation can include determining an action associated with the user based on the user state and the revenue value, where the action includes one or more parameters associated with one or more advertisements to be provided to the user. The operation can further include providing the action to the user.

An example embodiment operates by a non-transitory computer-readable medium having instructions stored thereon that, when executed by at least one computing device, cause the at least one computing device to perform operations. The operations can include receiving a user state associated with a user of a media device, where the user state corresponds to a time step. The operation can also include receiving a revenue value associated with the user, where the revenue value corresponds to the time step. The operations further include determining an action associated with the user based on the user state and the revenue value, where the action includes one or more parameters associated with one or more advertisements to be provided to the user. The operations can also include providing the one or more parameters associated with the one or more advertisements to a media system, to the media device, to a content server, or a system server. The media system, the media device, the content server, or the system server use the one or more parameters associated with the one or more advertisements to generate the one or more advertisements and provide the one or more advertisements to the user.

BRIEF DESCRIPTION OF THE FIGURES

The accompanying drawings are incorporated herein and form a part of the specification.

FIG. 1 illustrates a block diagram of a multimedia environment, according to some embodiments.
FIG. 2 illustrates a block diagram of a streaming media device, according to some embodiments.
FIG. 3 illustrates a block diagram of an example relationship between a revenue optimization system and a media device and/or a media system, according to some embodiments.
FIG. 4 is a flowchart for a method for optimizing user experience/engagement and revenue, according to an embodiment.
FIG. 5 illustrates an example computer system useful for implementing various embodiments.

In the drawings, like reference numbers generally indicate identical or similar elements. Additionally, generally, the left-most digit(s) of a reference number identifies the drawing in which the reference number first appears.

DETAILED DESCRIPTION

Provided herein are system, apparatus, device, method and/or computer program product embodiments, and/or combinations and sub-combinations thereof, for optimizing both user experience/engagement and revenue.

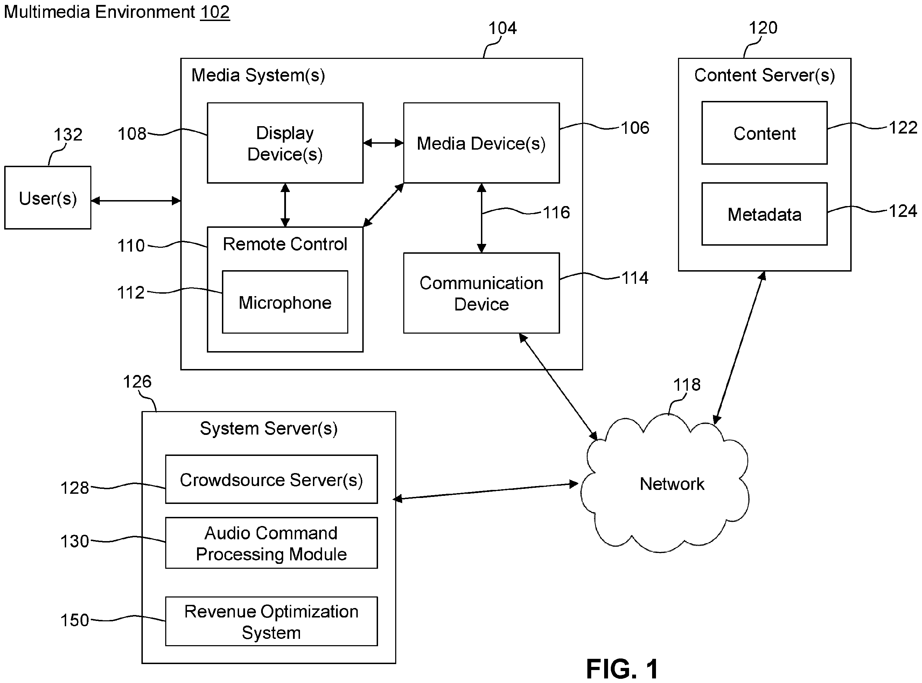

Various embodiments of this disclosure may be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

## Multimedia Environment

FIG. 1 illustrates a block diagram of a multimedia environment 102, according to some embodiments. In a non-limiting example, multimedia environment 102 may be directed to streaming media. However, this disclosure is applicable to any type of media (instead of or in addition to streaming media), as well as any mechanism, means, protocol, method and/or process for distributing media.

The multimedia environment 102 may include one or more media systems 104. A media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with the media system 104 to select and consume content.

Each media system 104 may include one or more media devices 106 each coupled to one or more display devices 108. It is noted that terms such as "coupled," "connected to," "attached," "linked," "combined" and similar terms may refer to physical, electrical, magnetic, logical, etc., connections, unless otherwise specified herein.

Media device 106 may be a streaming media device, DVD or BLU-RAY device, audio/video playback device, cable box, and/or digital video recording device, to name just a few examples. Display device 108 may be a monitor, television (TV), computer, smart phone, tablet, wearable (such as a watch or glasses), appliance, internet of things (IoT) device, and/or projector, to name just a few examples. In some embodiments, media device 106 can be a part of, integrated with, operatively coupled to, and/or connected to its respective display device 108.

Each media device 106 may be configured to communicate with network 118 via a communication device 114. The communication device 114 may include, for example, a cable modem or satellite TV transceiver. The media device 106 may communicate with the communication device 114 over a link 116, where the link 116 may include wireless (such as WiFi) and/or wired connections.

In various embodiments, the network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. The remote control 110 can be any component, part, apparatus and/or method for controlling the media device 106 and/or display device 108, such as a remote control, a tablet, laptop computer, smartphone, wearable, on-screen controls, integrated control buttons, audio controls, or any combination thereof, to name just a few examples. In an embodiment, the remote control 110 wirelessly communicates with the media device 106 and/or display device 108 using cellular, Bluetooth, infrared, etc., or any combination thereof. The remote control 110 may include a microphone 112, which is further described below.

The multimedia environment 102 may include a plurality of content servers 120 (also called content providers, channels or sources 120). Although only one content server 120 is shown in FIG. 1, in practice the multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form.

In some embodiments, metadata 124 includes data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122, such as but not limited to a trick mode index.

The multimedia environment 102 may include one or more system servers 126. The system servers 126 may operate to support the media devices 106 from the cloud. It is noted that the structural and functional aspects of the system servers 126 may wholly or partially exist in the same or different ones of the system servers 126.

The media devices 106 may exist in thousands or millions of media systems 104. Accordingly, the media devices 106 may lend themselves to crowdsourcing embodiments and, thus, the system servers 126 may include one or more crowdsource servers 128.

For example, using information received from the media devices 106 in the thousands and millions of media systems 104, the crowdsource server(s) 128 may identify similarities and overlaps between closed captioning requests issued by different users 132 watching a particular movie. Based on such information, the crowdsource server(s) 128 may determine that turning closed captioning on may enhance users' viewing experience at particular portions of the movie (for example, when the soundtrack of the movie is difficult to hear), and turning closed captioning off may enhance users' viewing experience at other portions of the movie (for example, when displaying closed captioning obstructs critical visual aspects of the movie). Accordingly, the crowdsource server(s) 128 may operate to cause closed captioning to be automatically turned on and/or off during future streamings of the movie.

The system servers 126 may also include an audio command processing module 130. As noted above, the remote control 110 may include a microphone 112. The microphone 112 may receive audio data from users 132 (as well as other sources, such as the display device 108). In some embodiments, the media device 106 may be audio responsive, and the audio data may represent verbal commands from the user 132 to control the media device 106 as well as other components in the media system 104, such as the display device 108.

In some embodiments, the audio data received by the microphone 112 in the remote control 110 is transferred to the media device 106, which is then forwarded to the audio command processing module 130 in the system servers 126. The audio command processing module 130 may operate to process and analyze the received audio data to recognize the user 132's verbal command. The audio command processing module 130 may then forward the verbal command back to the media device 106 for processing.

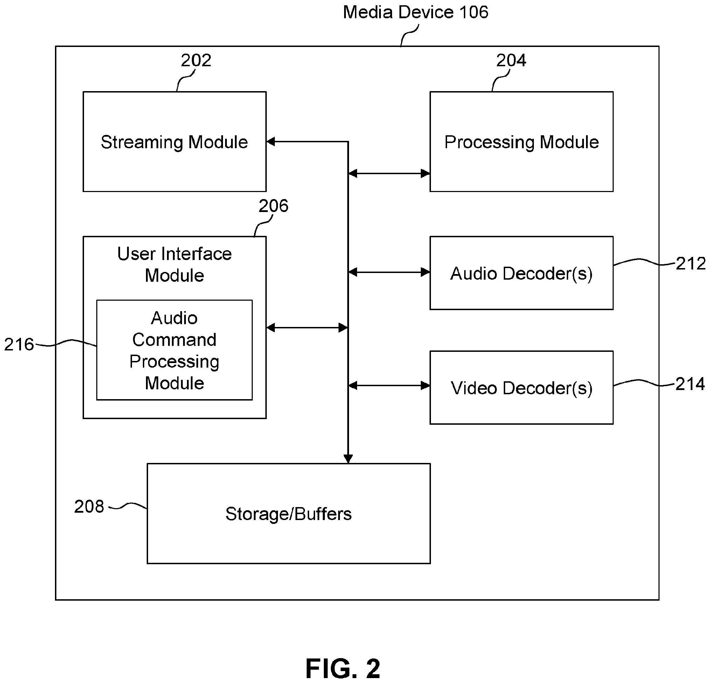

In some embodiments, the audio data may be alternatively or additionally processed and analyzed by an audio command processing module 216 in the media device 106 (see FIG. 2). The media device 106 and the system servers 126 may then cooperate to pick one of the verbal commands to process (either the verbal command recognized by the audio command processing module 130 in the system servers 126, or the verbal command recognized by the audio command processing module 216 in the media device 106).

In some embodiments, the system servers 126 may also include revenue optimization system 150. The revenue optimization system 150 may be configured to optimize both user experience/engagement and revenue. For example, the revenue optimization system 150 may be configured to optimize long term revenue with reinforcement learning to optimize both user engagement and revenue. The structural and functional aspects of the revenue optimization system 150 may wholly or partially exist in the same or different ones of the system servers 126. Additionally, or alternatively, the structural and functional aspects of the revenue optimization system 150 may exist in the media devices 106, the content servers 120, or a combination thereof. Additionally, or alternatively, the structural and functional aspects of the revenue optimization system 150 may exist as a separate entity.

FIG. 2 illustrates a block diagram of an example media device 106, according to some embodiments. Media device 106 may include a streaming module 202, processing module 204, storage/buffers 208, and user interface module 206. As described above, the user interface module 206 may include the audio command processing module 216.

The media device 106 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, H.265, AVI, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some embodiments, the user 132 may interact with the media device 106 via, for example, the remote control 110. For example, the user 132 may use the remote control 110 to interact with the user interface module 206 of the media device 106 to select content, such as a movie, TV show, music, book, application, game, etc. The streaming module 202 of the media device 106 may request the selected content from the content server(s) 120 over the network 118. The content server(s) 120 may transmit the requested content to the streaming module 202. The media device 106 may transmit the received content to the display device 108 for playback to the user 132.

In streaming embodiments, the streaming module 202 may transmit the content to the display device 108 in real time or near real time as it receives such content from the content server(s) 120. In non-streaming embodiments, the media device 106 may store the content received from content server(s) 120 in storage/buffers 208 for later playback on display device 108.

## Revenue Optimization <u>System</u>

Referring to FIG. 1, the system server 126 and/or the media device 106 can be configured to optimize both user experience/engagement and revenue. For example, the system server 126 and/or the media device 106 may use the revenue optimization system 150 may be configured to optimize the user experience/engagement and the revenue.

For example, the revenue optimization system 150 may be configured to optimize long term revenue with reinforcement learning to optimize both user engagement and revenue. Although some examples are discussed with respect to the system server 126 having the revenue optimization system 150, other parts of the multimedia environment 102 can be configured to provide the revenue optimization system 150 and/or the operations of the revenue optimization system 150, as discussed above.

The revenue optimization system 150 may use a model (e.g., an Alpha-RL model as discussed in more detail below) to optimize long term revenue and to address multiple challenges. For example, the revenue optimization system 150 may use reinforcement learning models for capturing delayed rewards generated by a sequence of actions such as long term expected streaming time, user retention, and long term expected revenue. The revenue optimization system 150 may use user's status as part of the observed state, also user's demographic information, activeness, tenure, time, and other features to personalize user actions based on different tolerance of the advertisement. Also, the revenue optimization system 150 may adjust a revenue factor gradually with the RL model so that there is no sudden user experience change.

The revenue optimization system 150 may be configured to optimize the user experience/engagement and the revenue for each user 132. The revenue optimization system 150 may be configured to optimize the user experience/engagement and the revenue during a sequence of discrete time steps over a total number of steps. At each time step and for each user 132, the revenue optimization system 150 can receive a user state and a revenue value, and the revenue optimization system 150 can determine an action associated with the user for the next time step based on the received user state and the received revenue value.

According to some embodiments, the revenue optimization system 150 may be configured to optimize the user experience/engagement and the revenue value for each user 132 and for each item of content that is provided to the user 132 using the media system 104 and/or using the media device 106. The items of content can include, but are not limited to, movies, TV series, video clips, audio clips, images, and the like.

The user state can include one or more parameters associated with the user's interaction with the media system 104 and/or using the media device 106. For example, the user state can include, but is not limited to, one or more of a retention rate associated with the user 132, an activeness of the user 132 on the media system 104 and/or using the media device 106, one or more parameters indicating how often the user 132 uses/returns to the media system 104 and/or using the media device 106, one or more parameters indicating the engagement of the user 132 with the media system 104 and/or using the media device 106 per a session (e.g., streaming or the like), one or more parameters indicating diversified items viewed/consumed by the user 132, or one or more parameters indicating the exploration and collaborative filtering of the user 132 based on the user's interest. It is noted that the user state can include other information indicating the interaction of the user 132 with the media system 104 and/or using the media device 106.

The retention rate associated with the user 132 can be defined as percentage of the times that the user 132 returns to the media device 106 and/or the media system 104 to consume content with respect to a given value. In a non-limiting example, if the user 132 returns to the media device 106 and/or the media system 104 to consume content on three days in a seven-day interval, the retention rate associated with the user 132 can be 3/7 (three divided by seven). However, the retention rate associated with the user 132 can be defined in other methods too.

The activeness of the user 132 on the media system 104 and/or using the media device 106 can be defined as the amount of time the user 132 spends on the media device 106 and/or the media system 104. Additionally, or alternatively, the activeness of the user 132 can be defined as the amount of content the user 132 consumes. The amount of content can be the number of videos/movies watched, the total length of videos/movies watched, the number of clicks on the contents provided to the user 132, the streaming time on the media device 106 and/or the media system 104, or the like. The activeness of the user 132 can be calculated per session, per week, per month, or any other metrics. However, the activeness of the user 132 can be defined in other methods too.

The user state can be based on a session associated with the interaction of the user 132 with the media system 104 and/or using the media device 106. A session can be a fixed amount of time that the user 132 is using the media system 104 and/or using the media device 106 to consume a content. In a non-limiting example, the amount of time for a session can be about three hours. However, the embodiments of this disclosure are not limited to this example and the session can have other time periods.

Additionally, or alternatively, user state can be based on an impression associated with the user 132. An impression can include an item of content provided (e.g., displayed) to the user 132 using, for example, the media system 104 and/or using the media device. In some examples, the fact that the user 132 interacts with the item of content does not affect the impression.

The revenue value received by the revenue optimization system 150 may include one or more parameters associated with a revenue value generated based on an item of content provided to the user 132 using, for example, the media system 104 and/or using the media device 106. The revenue value discussed herein can be based on the advertisements provided to the user 132 with the item of content that that the user consumes. However, the embodiments of this disclosure are not limited to advertisements as the source of the revenue, and the revenue value can be determined based on other methods. The revenue value received by the revenue optimization system 150 may be associated to each user 132 and for each item of content. In a non-limiting example, a threshold associated with the item of content can be used for determining the revenue value for the item of content for each time step. For example, a time threshold for the item of content can be set such that the revenue value for that item of content can determined if a length of playing the item of content (e.g., a length of playing a video by the user 132) is greater than the time threshold. In this non-limiting example, the revenue value is not determined for that time step and that item of content if the length of playing the item of content is less than the time threshold

Based on the user state and the revenue value received by the revenue optimization system 150 for each user, for each item of content, and for each time step, the revenue optimization system 150 may be configured to determine an action for the user 132 for the next time step. The action determined for the user 132 for the next time step can include one or more parameters for a source of revenue for the item of content that is to be provided to the user 132 in the next time step. In some examples, the one or more parameters for a source of revenue for the item of content can include one or more parameters associated with advertisement(s) associated with the item of content. For example, the one or more parameters associated with advertisement(s) associated with the item of content can include one or more of a number of the advertisements for the item of content, a length of the advertisements for the item of content, parameters associated with the substance of the advertisements for the item of content, parameters associated with the placement of the advertisements within the item of content, or the like.

The revenue optimization system 150 may be configured to determine the one or more parameters for a source of revenue for the item of content for a next time step using other criteria in addition to the user state and the revenue value received by the revenue optimization system 150 at a current time step. For example, revenue optimization system 150 may be configured to use one or more of parameters associated with the user 132, parameters associated with the media system 104, parameters associated the media device 106, or the like in addition to the user state and the revenue value determine the one or more parameters for the source of revenue for the item of content for the next time step

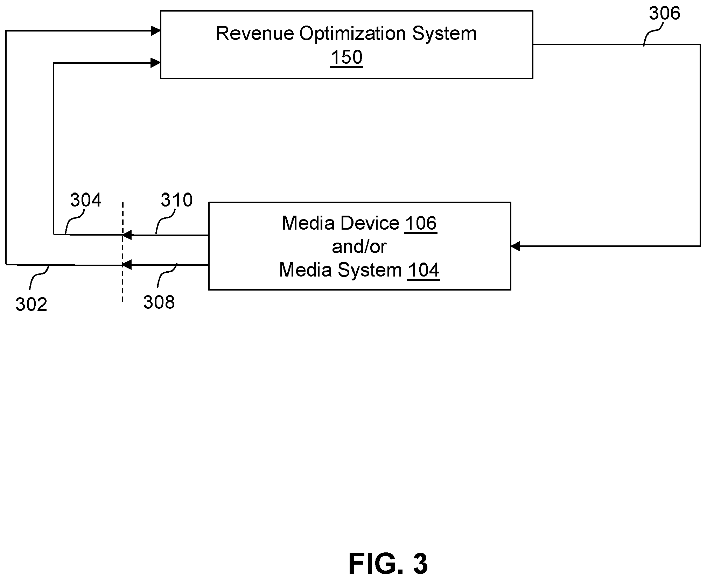

FIG. 3 illustrates a block diagram of an example relationship between the revenue optimization system 150 and the media device 106 and/or the media system 104, according to some embodiments.

The revenue optimization system 150 may receive the user state 302 and the revenue value 304 (e.g., reward) for time step t from the media device 106 and/or the media system 104. Using the received user state 302 and the received revenue value 304, the revenue optimization system 150 may generate action 306. The revenue optimization system 150 can send action 306 to the media device 106 and/or the media system 104. The media device 106 and/or the media system 104 can use action 306 to generate the user state 308 and the revenue value 310 (e.g., reward) for the next time step (time step t+1).

According to some embodiments, the revenue optimization system 150 may be configured to use a reinforcement learning (RL) method for determining the action 306 based on the user state 302 and the revenue value 304. The RL method (also referred herein as RL model or RL algorithm) is a machine learning model configured to determine and take actions in an environment to maximize a cumulative reward. For example, the revenue optimization system 150 may use an Alpha-RL method for determining the action 306. However, the embodiments of this disclosure are not limited to these methods and the revenue optimization system 150 may be configured to use other methods to determine the action 306. For example, the revenue optimization system 150 can use other machine learning (ML) based method for determining the action 306.

The revenue optimization system 150 may use the RL method and the following score to determine the action 306 in order to optimize both user experience/engagement and revenue:

$$\text{Score (user\_i, item\_j)} = \text{expected\_streaming\_time\_per\_impression (user\_i, item\_j)} *$$
$$\text{expected\_revenue\_per\_x\_minute\_streaming}^{\{alpha\}} \qquad (1)$$

The score in equation (1) is determined for each user 132 and for each item of content as discussed above. The expected_streaming_time_per_impression is equation (1) is the expected streaming time that the user 132 spends for an impression. This expected streaming time is determined (e.g., calculated and/or estimated) for each user 132 and for each item of content. The expected _revenue_per_x_minute_streaming in equation (1) is the expected revenue value determined (e.g., calculated or estimated) for the item of content streamed by the user 132. In some examples, the expected revenue value is calculated (or estimated) for each minute of the item of content streamed by the user 132. However, the expected revenue value can be determined for any other time period of the item of content streamed by the user 132.

The score determined in equation (1) can be used in determining how the items of content are provided (e.g.,

shown) to the user 132. For example, score determined in equation (1) can be used in determining which items of content are provided (e.g., shown) to the user 132 and where the items of content are provided (e.g., shown) to the user 132. In some examples, a ranking model (not shown) can use the score determined in equation (1) to rank the content that are provided (e.g., shown) to the user 132. The ranking model (not shown) can be part of system server 126, the media system 104, the media device 106, and/or the content server 120.

The alpha in equation (1) can have a value between 0 and 1 (e.g., $0 \leq alpha \leq 1$). When alpha has the value 0, the score of equation (1) is determined based on the expected streaming time. With increasing value of alpha in equation (1), the ranking shifts towards high revenue items and advertisement.

The revenue optimization system 150 may use the RL method (e.g., Alpha-RL method) to adjust the value of alpha in equation (1) to determine the action 306 in order to optimize both user experience/engagement and revenue. According to some embodiments, revenue optimization system 150 is configured to use the RL method to learn from the interactions between the revenue optimization system 150 and the media device 106 and/or the media system 104. The revenue optimization system 150 and the media device 106 and/or the media system 104 interact at each of a sequence of discrete time steps. As discussed above, at each discrete time step (e.g., time step t), the revenue optimization system 150 receives the user state 302 and the revenue value 304. The revenue optimization system 150 uses the user state 302 and the revenue value 304 to determine (e.g., calculate, select, estimate) the action 306. The revenue optimization system 150 can use the RL method to determine the action 306 by adjusting the value of alpha in equation (1) based on the user state 302 and the revenue value 304.

The revenue optimization system 150 sends the action 306 to the media device 106 and/or the media system 104 to be acted on. Based on the action 306, the media device 106 and/or the media system 104 generates the user state 308 and the revenue value 310 for the next time step (time step t+1).

The revenue optimization system 150 can operate for a given number of time steps to optimize both user experience/engagement and revenue. In some examples, the given number of time steps can be pre-set. Additionally, or alternatively, the given number of time steps can be set or determined during the operation of the revenue optimization system 150. The given number of time steps can be determine using the following equation:

$$\text{Number of time steps} = number\_of\_days\_for\_optimize\_long\_term\_revenue \: / $$
$$number\_of\_days\_per\_step \: (or \: when \: user \: churned) \qquad (2)$$

The number_of_days_for_optimize_long_term_revenue in equation (2) can be the number of days that would take to optimize the long term revenue. In some examples, the number_of_days_for_optimize_long_term_revenue can be a pre-set value. In some examples, the number_of_days_for_optimize_long_term_revenue can be determined (e.g., calculated or estimated) during the operation of the revenue optimization system 150. In some examples, the number_of_days_per_step include the number of days that are in each time step. Each time step can include a pre-determined number of hours, a pre-determined number of days, a pre-determined number of weeks, or the like.

In a non-limiting example, each time step can be 1 week (7 days). The number_of_days_for_optimize_long_term_revenue in equation (2) can be 91 days. In this example, the number of time steps that the revenue optimization system 150 uses can be 13. However, if the user 132 churned on step 10, the revenue optimization system 150 can operated up to step 10, which can capture the user retention in optimizing the long term revenue.

According to some embodiments, the long term revenue can be define based on the number_of_days_for_optimize_long_term_revenue in equation (2) and/or based on the number of time steps that that the revenue optimization system 150 is to operate.

The action space for determining the value of alpha in equation (1) can include a set of values of alpha. The revenue optimization system 150 is configured to determine the value of alpha (based on the user state 302 and the revenue value 304) from this set of values of alpha. For example, the action space for determining the value of alpha in equation (1) can include a set of increment of alpha and decrement of alpha. For example, the action space for determining the value of alpha in equation (1) can include a set of {dec(1), dec(2), dec(3), ... , dec(i), inc(i+1), inc(i+2), ... , inc(K)}. In this example, the revenue optimization system 150 is configured to determine the value of alpha (based on the user state 302 and the revenue value 304) from the set of increment of alpha and decrement of alpha. For example, if the value of alpha for time step t was determined based on dec(2) from the set, the revenue optimization system 150 may determine the value of alpha (based on the user state 302 and the revenue value 304) to be dec(3) for time step t+1. In these examples, the value of alpha is incremented or decremented in small values in each time step to avoid large and sudden changes in the action 306. Suddenly changing the user experience (e.g., increasing a large number of advertisements) can result in changing of user behavior such as drop on DSD and churning. By gradually adjusting the alpha (and therefore, gradually adjusting the action 306), there is no sudden change in the user experience.

Additionally, or alternatively, the action space for determining the value of alpha in equation (1) can include a set of discrete values of alpha. For example, the action space for determining the value of alpha in equation (1) can include a set of discrete values such as [0, 0.1,0.2,...,0.9,1]. However, the set of discrete values can include other discrete values between 0 and 1. In this example, the revenue optimization system 150 is configured to determine the value of alpha (based on the user state 302 and the revenue value 304) from the set of discrete values of alpha. For example, if the value of alpha for time step t was determined based on 0.2 from the set, the revenue optimization system 150 may determine the value of alpha (based on the user state 302 and the revenue value 304) to be 0.4 for time step t+1. In these examples, the value of alpha is incremented or decremented in small values in each time step to avoid large and sudden changes in the action 306.

However, the embodiments of this disclosure are not limited to these examples and the revenue optimization system 150 can use other methods to determine the value of alpha based on the user state 302 and the revenue value 304.

Based on the determined value of alpha in each time step, the revenue optimization system 150 is configured to the determine the action 306 to be performed by the user 132 (e.g., using the media device 106 and/or he media system 104). The action 306 can include one or more parameters for a source of revenue for the item of content that is to be provided to the user 132 in the next time step. In some examples, the one or more parameters for a source of revenue for the item of content can include one or more parameters associated with advertisement(s) associated with the item of content. For example, the one or more parameters associated with advertisement(s) associated with the item of content can include one or more of a number of the advertisements for the item of content, a length of the advertisements for the item of content, parameters associated with the substance of the advertisements for the item of content, parameters associated with the placement of the advertisements within the item of content, or the like.

The revenue optimization system 150 can use a Markov Decision Process (MDP) to optimize both user experience/engagement and revenue. The revenue optimization system 150 can observe the current activity change of the user 134 such as, but not limited to, DSD, total streaming time, or the like, which may not represent entire state of the user 134. The revenue optimization system 150 may use sequences of actions and observations (e.g., o1, a1, o2, a2, ..., ot, at) and learn a policy based on those sequences. The revenue optimization system 150 can use other information associated with the user 134 (e.g., user's demographic information, tenure time, or the like) in building and updating the RL model. The revenue optimization system 150 can use other reinforcement learning / deep reinforcement models to achieve human level or super human level performance on games. These reinforcement learning / deep reinforcement models can include, but are not limited to, Deep Q-Networks (DQN), asynchronous advantage actorcritic (A3C), Proximal Policy Optimization (PPO), Distributed Distributional Deep Deterministic Policy Gradient (D4PG) algorithm, or the like methods. Additionally, or alternatively, the sets of values of alpha and the RL models of this disclosure can be applied to reinforcement learning / deep reinforcement models such as, but not limited to, DQN, A3C, PPO, D4PG, or the like methods.

According to some embodiments, in addition to, or alternative to, using online methods, the revenue optimization system 150 can use offline methods to train, update, and use the RL model for optimizing both user experience/engagement and revenue. For example, the revenue optimization system 150 can use an offline simulator to simulate online environment of the media system 104, the media device 106, and/or the user 132. The revenue optimization system 150 can use the offline simulator to train, update, and/or test different RL models and parameter settings before RL model is used online on the media system 104, the media device 106, and/or the user 132.

As discussed above, the revenue optimization system 150 is configured to optimize both user experience/engagement and revenue for each user. Different users can have different tolerance on the number of advertisements that are displayed to them. By using information associated with the user 134, the revenue optimization system 150 can optimize both user experience/engagement and revenue for each user. The information associated with the user can include, but is not limited to, demographic information of the user 134, activeness of the user 134, tenure time of the user 134, and other features of the user 134 that can be used to personalize user actions based on different tolerance of the advertisement.

The information associated with the user 134 can also indicated with the user 134 is a new user or not. For new users, the revenue optimization system 150 can use a lower number of advertisements and/or a lower frequency of providing advertisements to improve the new users' DSD and retention to optimize the long term revenue. The revenue optimization system 150 can gradually increase the number and/or the frequency of the advertisements provided to the new user 134 using the methods discussed above.

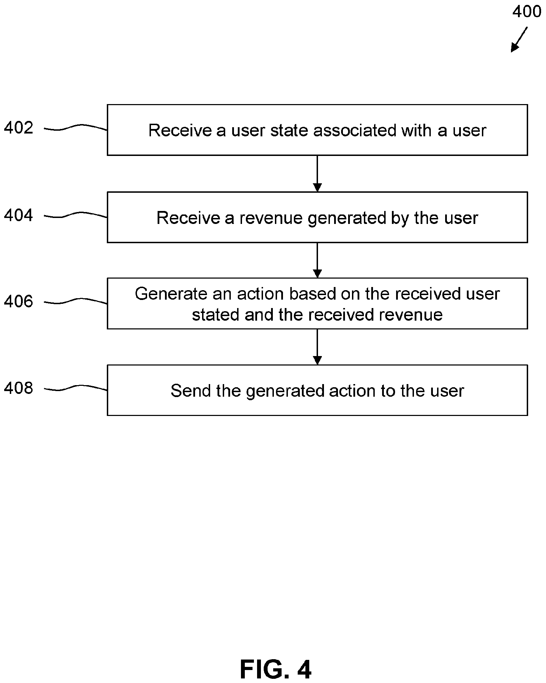

FIG. 4 is a flowchart for a method 400 for optimizing user experience/engagement and revenue, according to an embodiment. Method 400 can be performed by processing logic that can include hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 4, as will be understood by a person of ordinary skill in the art.

Method 400 shall be described with reference to FIGS. 1 and 3. However, method 400 is not limited to that example embodiment.

At 402, one or more user states are received. For example, the revenue optimization system 150 can receive a user state that is associated with a user (e.g., the user 132). The revenue optimization system 150 may receive the user state from a media system (e.g., the media system 104) of the user 132. Additionally, or alternatively, the revenue optimization system 150 can receive the user state from a media device (e.g., the media device 106) of the user 132. The revenue optimization system 150 may receive the user state from other devices and/or systems such as, but not limited to, the system server 126, the content server 120, or the like. The user state corresponds to a first time step (e.g., time step t).

At 402, the revenue optimization system 150 may also receive additional information associated with the user 132. The additional information associated with the user can include, but is not limited to demographic information of the user 134, activeness of the user 134 (e.g., the amount of time the user 134 has been active on the media system 104, on the media device 106, with the content server 120, with the system server 126, or the like), tenure time of the user 134 (e.g., the amount of time the user 134 has subscribed to and/or use the media system 104, the media device 106, the content server 120, the system server 126, or the like), and other features of the user 134 that can be used to personalize user actions based on different tolerance of the advertisement.

At 404, one or more revenue values are received. For example, the revenue optimization system 150 may receive a revenue value that is generated by the user 132. The revenue optimization system 150 may receive the revenue from a media system (e.g., the media system 104) of the user 132. Additionally, or alternatively, the revenue optimization system 150 may receive the revenue value from a media device (e.g., the media device 106) of the user 132. The revenue optimization system 150 may receive the revenue value from other devices and/or systems such as, but not limited to, the system server 126, the content server 120, or the like. The revenue value corresponds to a first time step (e.g., time step t).

Method 400 can further include receiving a number of time steps for performing method 400, a length of time for performing method 400, a length of time for each time step, or the like. The revenue optimization system 150 may be configured to perform method 400 for the received number of time steps. Additionally, or alternatively, the revenue optimization system 150 may perform method 400 for the receive length of time.

At 406, one or more actions are generated based on one or more of the received user state(s), the received user information, and the received revenue value(s). For example, the revenue optimization system 150 can use the received user state and the received revenue value to determine (e.g., generate, calculate, estimate) the action to be performed by the user 132.

As discussed above, the revenue optimization system 150 can use an RL method to determine a value of alpha in equation (1) using the received user state and the received revenue value. However, the embodiments of this disclosure are not limited to this example and the revenue optimization system 150 may use other methods to determine the value of alpha in equation (1) using the received user state and the received revenue value. Using the value of alpha, the revenue optimization system 150 can determine the action.

The action determined for the user 132 can include one or more parameters for a source of revenue for the item of content that is to be provided to the user 132 in the next time step. In some examples, the one or more parameters for a source of revenue for the item of content can include one or more parameters associated with advertisement(s) associated with the item of content. For example, the one or more parameters associated with advertisement(s) associated with the item of content can include one or more of a number of the advertisements for the item of content, a length of the advertisements for the item of content, parameters associated with the substance of the advertisements for the item of content, parameters associated with the placement of the advertisements within the item of content, or the like.

According to some embodiments, the revenue optimization system 150 can include and/or can access a database the stores a relationship between the values of alpha and the available actions. For example, the database can store the relationship between the values of alpha and the one or more parameters for a source of revenue for the item of content. For example, the database can store the relationship between the values of alpha and the one or more parameters associated with advertisement(s) associated with the item of content to be provided to the user 132. The relationship can be stored in a table in the database. Additionally, or alternatively, other methods can be used to determine the one or more parameters for a source of revenue for the item of content (e.g., the one or more parameters associated with advertisement(s) associated with the item of content) from the determined value of alpha.

In addition to determining the action, at 406, the revenue optimization system 150 can use the received user state and the received revenue value to further train and/or update the model (e.g., the RL model) that the revenue optimization system 150 is using. For example, the revenue optimization system 150 can train and/or update the parameters of the model (e.g., the RL model) that the revenue optimization system 150 uses.

At 408, the determined (e.g., generated, calculated, estimated) action is sent (e.g., is provided) to the user. For example, the revenue optimization system 150 can send (e.g., provide) the determined action to the user 132. The revenue optimization system 150 may send the action to a media system (e.g., the media system 104) of the user 132. Additionally, or alternatively, the revenue optimization system 150 may send the action to a media device (e.g., the media device 106) of the user 132. The revenue optimization system 150 may send the action to other devices and/or systems such as, but not limited to, the system server 126, the content server 120, or the like.

In some embodiments, sending the determined action can include providing the one or more parameters for the source of revenue for the item of content (e.g., the one or more parameters associated with advertisement(s) associated with the item of content) determine in step 406 to the media system 104, to the media device 106, to the content server 120, and/or to the system server 126. The media system 104, to the media device 106, to the content server 120, and/or to the system server 126 can use the one or more parameters for the source of revenue to generate the source of revenue (e.g., the advertisements) based on the one or more parameters of the source of revenue for the item of content. The media system 104, to the media device 106, to the content server 120, and/or to the system server 126 can add the source of revenue to the item of content, and can provide the item of content to the user 132.

Operations 402, 404, 406, and 408 were discussed above for a time step. After operation 408, the revenue optimization system 150 can determine whether the number of time steps and/or the length of time for performing method 400 has reached. If the number of time steps and/or the length of time has reached, method 400 may stop. However, if the number of time steps and/or the length of time is not reached, method 400 can move to operation 402 after operation 408 to determine the action for the next time step. For example, the revenue optimization system 150 can receive a second user state associated with the user 132 (the second user state corresponding to a second time step (e.g., time step t+1). The revenue optimization system 150 can receive a second revenue value associated with the user 132 (the second revenue value corresponding to the second time step). The revenue optimization system 150 can determine a second action associated with the user 132 based on the second user state and the second revenue value. The second action can include second one or more parameters associated with the one or more advertisements. The revenue optimization system 150 can send (e.g., provide) the second action to the user. In some embodiments, the action and the second action can correspond to the same advertisement(s) but with different parameters. Additionally, or alternatively, the action and the second action can correspond to the different advertisements.

Although method 400 is discussed above to be performed for each user, the embodiments of this disclosure are not limited to these examples. For example, a plurality of users can be clustered in to one user and the embodiments of this disclosure can be applied to that clustered user. The user state, the information associated with the user, and the revenue value for the clustered user can be determined based on the user state, the information associated with the user, and the revenue value for the plurality of users, respectively. For example, the user state for the clustered user can be determined based on the user states for the plurality of users. The information associated with the clustered user can be determined based on the information associated with the plurality of users. And the revenue value for the clustered user can be determined based on the revenue values of the plurality of users.

For example, the user state, the information associated with the user, and the revenue value for the clustered user can be determined based on an average of the user state, the information associated with the user, and the revenue value for the plurality of users, respectively. Additionally, or alternatively, the user state, the information associated with the user, and the revenue value for the clustered user can be determined based on a maximum or a minimum of the user state, the information associated with the user, and the revenue value for the plurality of users, respectively.

*Example Computer System*

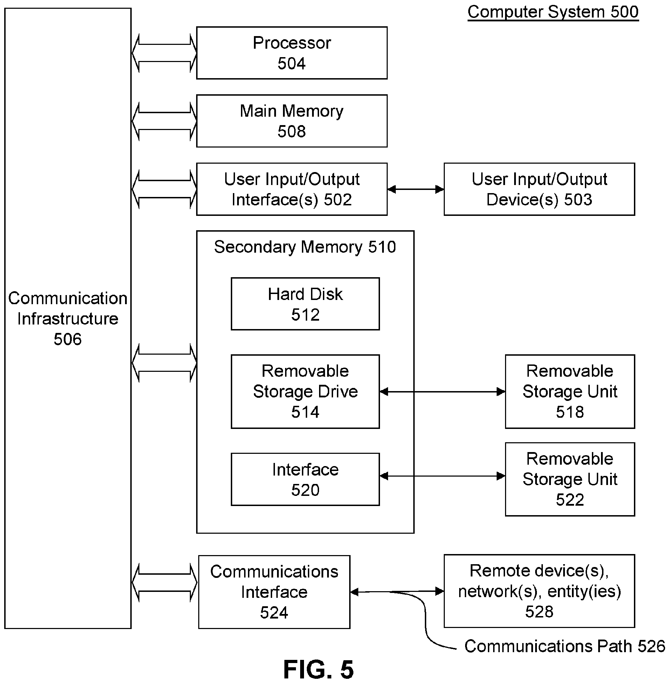

Various embodiments may be implemented, for example, using one or more well-known computer systems, such as computer system 500 shown in FIG. 5. For example, the media device 106 may be implemented using combinations or sub-combinations of computer system 500. Also or alternatively, one or more computer systems 500 may be used, for example, to implement any of the embodiments discussed herein, as well as combinations and sub-combinations thereof.

Computer system 500 may include one or more processors (also called central processing units, or CPUs), such as a processor 504. Processor 504 may be connected to a communication infrastructure or bus 506.

Computer system 500 may also include user input/output device(s) 503, such as monitors, keyboards, pointing devices, etc., which may communicate with communication infrastructure 506 through user input/output interface(s) 502.

One or more of processors 504 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 500 may also include a main or primary memory 508, such as random access memory (RAM). Main memory 508 may include one or more levels of cache. Main memory 508 may have stored therein control logic (i.e., computer software) and/or data.

Computer system 500 may also include one or more secondary storage devices or memory 510. Secondary memory 510 may include, for example, a hard disk drive 512 and/or a removable storage device or drive 514. Removable storage drive 514 may be a floppy disk drive, a magnetic tape drive, a compact disk drive, an optical storage device, tape backup device, and/or any other storage device/drive.

Removable storage drive 514 may interact with a removable storage unit 518. Removable storage unit 518 may include a computer usable or readable storage device having stored thereon computer software (control logic) and/or data. Removable storage unit 518 may be a floppy disk, magnetic tape, compact disk, DVD, optical storage disk, and/ any other computer data storage device. Removable storage drive 514 may read from and/or write to removable storage unit 518.

Secondary memory 510 may include other means, devices, components, instrumentalities or other approaches for allowing computer programs and/or other instructions and/or data to be accessed by computer system 500. Such means, devices, components, instrumentalities or other approaches may include, for example, a removable storage unit 522 and an interface 520. Examples of the removable storage unit 522 and the interface 520 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 500 may further include a communication or network interface 524. Communication interface 524 may enable computer system 500 to communicate and interact with any combination of external devices, external networks, external entities, etc. (individually and collectively referenced by reference number 528). For example, communication interface 524 may allow computer system 500 to communicate with external or remote devices 528 over communications path 526, which may be wired and/or wireless (or a combination thereof), and which may include any combination of LANs, WANs, the Internet, etc. Control logic and/or data may be transmitted to and from computer system 500 via communication path 526.

Computer system 500 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 500 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 500 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 500, main memory 508, secondary memory 510, and removable storage units 518 and 522, as well as tangible articles of manufacture embodying any combination of the foregoing. Such control logic, when executed by one or more data processing devices (such as computer system 500 or processor(s) 504), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 5. In particular, embodiments can operate with software, hardware, and/or operating system implementations other than those described herein.

## Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

**Claims**

1. A computer-implemented method for providing one or more advertisements to a media device, comprising:

   receiving, by at least one computer processor, a user state associated with a user of the media device, wherein the user state corresponds to a time step;
   receiving a revenue value associated with the user, wherein the revenue value corresponds to the time step;
   determining an action associated with the user based on the user state and the revenue value, wherein the action comprises one or more parameters associated with the one or more advertisements; and
   providing the action to the user.

2. The computer-implemented method of claim 1, further comprising:

   receiving a second user state associated with the user, wherein the second user state corresponds to a second time step;
   receiving a second revenue value associated with the user, wherein the second revenue value corresponds to the second time step;
   determining a second action associated with the user based on the second user state and the second revenue value, wherein the second action comprises second one or more parameters associated with the one or more advertisements; and
   providing the second action to the user.

3. The computer-implemented method of claim 1, further comprising:

   receiving information associated with the user, wherein the information associated with the user comprises demographic information of the user, activeness of the user on the media device, or a tenure time of the user with the media device; and
   determining the action associated with the user based on the user state, the revenue value, and the information associated with the user.

4. The computer-implemented method of claim 1, wherein the user state comprises one or more of a retention rate associated with the user, an activeness of the user on the media device, one or more parameters indicating how often the user uses the media device, or one or more parameters indicating engagement of the user with the media device per a session.

5. The computer-implemented method of claim 1, wherein the determining the action associated with the user comprises using a reinforcement learning model to determine a first parameter, optionally wherein the computer-implemented method further comprises determining the action associated with the user using the first parameter, optionally wherein the determining the action associated with the user comprises using a relationship between values of the first parameter and the one or more parameters associated with the one or more advertisements.

6. The computer-implemented method of claim 1, wherein the providing the action to the user comprises:

   providing the one or more parameters associated with the one or more advertisements to a media system, to the media device, to a content server, or a system server,
   wherein the media system, the media device, the content server, or the system server use the one or more parameters associated with the one or more advertisements to generate the one or more advertisements and provide the one or more advertisements to the user.

7. A system, comprising:

   one or more memories;
   at least one processor each coupled to at least one of the memories and configured to perform operations comprising:

   receiving a user state associated with a user of a media device, wherein the user state corresponds to a time step;
   receiving a revenue value associated with the user, wherein the revenue value corresponds to the time step;
   determining an action associated with the user based on the user state and the revenue value, wherein the action comprises one or more parameters associated with one or more advertisements to be provided to the user; and
   providing the action to the user.

8. The system of claim 7, the operations further comprising:

   receiving a second user state associated with the user, wherein the second user state corresponds to a second time step;
   receiving a second revenue value associated with the user, wherein the second revenue value corresponds to the second time step;
   determining a second action associated with the user based on the second user state and the second revenue value, wherein the second action comprises second one or more parameters associated with the one or more advertisements; and
   providing the second action to the user.

9. The system of claim 7, the operations further comprising:

   receiving information associated with the user, wherein the information associated with the user comprises demographic information of the user, activeness of the user on the media device, or a tenure time of the user with the media device; and
   determining the action associated with the user based on the user state, the revenue value, and the information associated with the user.

10. The system of claim 7, wherein the user state comprises one or more of a retention rate associated with the user, an activeness of the user on the media device, one or more parameters indicating how often the user uses the media device, or one or more parameters indicating engagement of the user with the media device per a session.

11. The system of claim 7, wherein the determining the action associated with the user comprises using a reinforcement learning model to determine a first parameter.

12. The system of claim 11, the operations further comprising:

   determining the action associated with the user using the first parameter,
   optionally wherein the determining the action associated with the user comprises using a relationship between

14

values of the first parameter and the one or more parameters associated with the one or more advertisements, optionally wherein the providing the action to the user comprises:

> providing the one or more parameters associated with the one or more advertisements to a media system, to the media device, to a content server, or a system server,
> wherein the media system, the media device, the content server, or the system server use the one or more parameters associated with the one or more advertisements to generate the one or more advertisements and provide the one or more advertisements to the user.

13. A non-transitory computer-readable medium having instructions stored thereon that, when executed by at least one computing device, cause the at least one computing device to perform operations comprising:

> receiving a user state associated with a user of a media device, wherein the user state corresponds to a time step;
> receiving a revenue value associated with the user, wherein the revenue value corresponds to the time step;
> determining an action associated with the user based on the user state and the revenue value, wherein the action comprises one or more parameters associated with one or more advertisements to be provided to the user; and
> providing the one or more parameters associated with the one or more advertisements to a media system, to the media device, to a content server, or a system server,
> wherein the media system, the media device, the content server, or the system server use the one or more parameters associated with the one or more advertisements to generate the one or more advertisements and provide the one or more advertisements to the user.

14. The non-transitory computer-readable medium of claim 13, the operations further comprising:

> receiving information associated with the user, wherein the information associated with the user comprises demographic information of the user, activeness of the user on the media device, or a tenure time of the user with the media device; and
> determining the action associated with the user based on the user state, the revenue value, and the information associated with the user.

15. The non-transitory computer-readable medium of claim 13, wherein the user state comprises one or more of a retention rate associated with the user, an activeness of the user on the media device, one or more parameters indicating how often the user uses the media device, or one or more parameters indicating engagement of the user with the media device per a session, optionally wherein the determining the action associated with the user comprises using a reinforcement learning model to determine a first parameter, and the operations further comprise determining the action associated with the user using the first parameter.

Multimedia Environment 102

FIG. 1

EP 4 414 924 A1

Media Device 106

**FIG. 2**

```
                    ┌─────────────────────────────────┐
                    │   Revenue Optimization System   │        306
                    │              150                │
                    └─────────────────────────────────┘
```

Media Device 106
and/or
Media System 104

304   310

302   308

**FIG. 3**

EP 4 414 924 A1

402 — Receive a user state associated with a user

404 — Receive a revenue generated by the user

406 — Generate an action based on the received user stated and the received revenue

408 — Send the generated action to the user

EP 4 414 924 A1

**FIG. 4**

**FIG. 5**

**EP 4 414 924 A1**

Europäisches Patentamt

European Patent Office

Office européen des brevets

# EUROPEAN SEARCH REPORT

Application Number

EP 24 15 6651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/092593 A1 (SINGHAI PANKHRI [IN] ET AL) 19 March 2020 (2020-03-19)<br>* paragraphs [0002] - [0004] *<br>* paragraphs [0014] - [0022] *<br>* paragraphs [0033] - [0040] *<br>* paragraphs [0050] - [0055] *<br>* paragraphs [0078] - [0090] *<br>* paragraphs [0093] - [0095], [0100] *<br>----- | 1-15 | INV.<br>G06Q30/0242<br>G06N20/00<br>G06Q30/0241<br>G06Q30/0251 |
| X | ZOU LIXIN ZOULX15@MAILS TSINGHUA EDU CN ET AL: "Reinforcement Learning to Optimize Long-term User Engagement in Recommender Systems",<br>CCS '18: PROCEEDINGS OF THE 2018 ACM SIGSAC CONFERENCE ON COMPUTER AND COMMUNICATIONS SECURITY, ACM PRESS, NEW YORK, NEW YORK, USA,<br>25 July 2019 (2019-07-25), pages 2810-2818, XP058635430,<br>DOI: 10.1145/3292500.3330668<br>ISBN: 978-1-4503-6201-6<br>* page 2810 - page 2812 *<br>----- | 1-15 | |

TECHNICAL FIELDS SEARCHED (IPC)

G06Q
G06N

The present search report has been drawn up for all claims

| Place of search | Date of completion of the search | Examiner |
|---|---|---|
| The Hague | 18 June 2024 | De Smet, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

21

## ANNEX TO THE EUROPEAN SEARCH REPORT
## ON EUROPEAN PATENT APPLICATION NO.

EP 24 15 6651

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2024

| Patent document cited in search report | Publication date | Patent family member(s) | Publication date |
|---|---|---|---|
| US 2020092593 A1 | 19-03-2020 | US 2020053403 A1<br>US 2020092593 A1 | 13-02-2020<br>19-03-2020 |

EPO FORM P0459

For more details about this annex : see Official Journal of the European Patent Office, No. 12/82